Europäisches Patentamt

European Patent Office

Office européen des brevets

(11) Numéro de publication : **0 013 189**
**B1**

(12)  ## FASCICULE DE BREVET EUROPÉEN

(45) Date de publication du fascicule du brevet :
21.10.81

(21) Numéro de dépôt : 79400630.4

(22) Date de dépôt : 10.09.79

(51) Int. Cl.³ : **B 23 D 43/02**

(54) Broche à éléments de coupe rapportés.

(30) Priorité : 10.11.78 FR 7831864

(43) Date de publication de la demande :
09.07.80 (Bulletin 80/14)

(45) Mention de la délivrance du brevet :
21.10.81 Bulletin 81/42

(84) Etats contractants désignés :
DE GB IT

(56) Documents cités :
DE - A - 2 304 136
FR - A - 2 122 177
US - A - 3 332 129

(73) Titulaire : **REGIE NATIONALE DES USINES RENAULT**
**Boite postale 103 8-10 avenue Emile Zola**
**F-92109 Boulogne-Billancourt (FR)**

(72) Inventeur : **Pierre, Jackie**
**9, rue Albert Camus**
**F-92340 Bourg La Reine (FR)**

Broche à éléments de coupe rapportés

La présente invention se rapporte à une broche à éléments de coupe rapportés, notamment pour le brochage de cannelures ou de profils analogues, et concerne plus particulièrement la section de finition d'une telle broche, avec reprise sur flancs des cannelures.

On connaît une broche pour cannelures dont la section de finition avec reprise sur flancs est constituée par un manchon monobloc rapporté sur un corps de broche. Ce manchon est fixé au corps de broche à l'aide d'un élément de retenue en forme de douille bloqué par rapport au corps de broche à l'aide de vis. Ce mode de réalisation connu représente un progrès par rapport aux broches monoblocs, c'est-à-dire dont la section de dégrossissage et la section de finition sont réalisées d'une seule pièce. En effet, c'est la section de finition qui détermine la précision finale du brochage et il est donc nécessaire que les taillants de cette section, qui se présentent sous la forme de dents dans le cas d'une broche pour cannelures, soient rectifiés avec une grande précision. Or, les cotes sur flancs de telles dents diminuent au fur et à mesure des affûtages, ce qui, dans le cas d'une broche monobloc, exige le changement de l'ensemble de la broche après un certain nombre d'affûtages, bien que les dents de la section de dégrossissage, auxquelles sont imposés des impératifs de précision moins sévères, se trouvent encore dans la plage de tolérances imposée.

Sur la broche connue citée ci-dessus, sur laquelle la section de finition est constituée par un manchon monobloc rapporté, il suffit dans ce cas de remplacer le manchon de finition, tandis que la section de dégrossissage réalisée d'une seule pièce avec le corps de broche peut être conservée.

Malgré cette possibilité de remplacer séparément le manchon de finition, cette broche connue présente de nombreux inconvénients.

Le prix de revient d'un tel manchon de finition monobloc est élevé, en raison des difficultés d'usinage des dents de ce manchon. En effet, la rectification des dents ne peut se faire que sur un flanc à la fois. Par ailleurs, la dépouille sur flanc des dents ne peut être réalisée qu'à l'aide d'une meule de petit diamètre. Enfin, si en cours de fabrication ou en cours d'usinage, une dent casse ou est hors tolérances, le manchon dans son ensemble est inutilisable. Enfin, toute casse d'une dent en cours de brochage entraîne également la mise au rebut du manchon tout entier.

Pour tenter de remédier aux inconvénients de cette broche à manchon de finition monobloc rapporté, on a déjà proposé de constituer la section de finition d'une broche par un empilement d'anneaux dentés enfilés sur un corps de broche, chaque anneau portant une rangée de dents réparties sur son pourtour. Les anneaux sont immobilisés les uns par rapport aux autres au moyen de pions enfoncés parallèlement à l'axe de la broche dans des trous de passage ménagés dans les anneaux, de manière que chaque pion immobilise deux anneaux successifs l'un par rapport à l'autre. Cette subdivision de la section de finition en anneaux dentés présente l'avantage qu'au lieu d'avoir à remplacer l'ensemble de la section de finition après un certain nombre d'affûtages, il suffit, lorsque les cotes des dents évoluent au fur et à mesure des affûtages, de retirer l'anneau se trouvant en première position, de faire avancer d'une position les anneaux restants et d'ajouter un anneau neuf à la dernière position. Cela permet d'utiliser tous les anneaux jusqu'à l'extrême limite de résistance à la coupe. De plus, si, en cours de brochage, un anneau casse, on le remplace simplement par un autre au lieu d'avoir à remplacer l'ensemble du manchon. Un tel ensemble d'anneaux rapportés permet donc d'usiner un plus grand nombre de pièces qu'un manchon monobloc. Enfin, si, en cours de fabrication, l'un des anneaux est cassé ou hors tolérances, il suffit de refaire un anneau au lieu d'avoir à refaire un manchon monobloc complet.

Malgré ces avantages, cette broche connue à anneaux rapportés présente un grave inconvénient. En effet, les anneaux sont assemblés deux à deux par les pions et les tolérances des anneaux successifs s'accumulent, aucun positionnement particulier n'étant prévu entre chaque anneau et le corps de broche. Cela entraîne des difficultés de rectification des dents des anneaux ainsi qu'une précision insuffisante lors du brochage. De plus, le prix de revient d'une telle broche est très élevé.

On connaît par ailleurs, notamment des brevets DE 2 304 136 et US 3 332 129, des outils de brochage dont la section de finition est formée d'un empilage d'anneaux dentés et d'anneaux d'espacement qui sont tous positionnés par rapport au corps de la broche au moyen d'une clavette longitudinale commune, c'est-à-dire parallèle à l'axe de la broche.

Mais un tel montage ne peut supprimer avec la même qualité les jeux radial et circonférentiel de chaque anneau pris individuellement. De plus, lorsque l'on décale les anneaux pour en ajouter un nouveau, on ne peut leur assurer exactement le même positionnement qu'auparavant puisqu'ils se déplacent sur la clavette.

La présente invention a pour objet une broche à éléments de coupe rapportés, en particulier une broche pour cannelures, dont la section de finition est formée d'un empilage d'anneaux dentés, cette broche remédiant aux inconvénients des broches connues à anneaux dentés rapportés tout en conservant les avantages des broches connues. L'invention a donc pour objet une broche qui, tout en conservant les avantages concernant l'interchangeabilité des anneaux et le faible prix de revient de ces derniers, assure un positionnement parfait des anneaux les uns par rapport aux autres et par rapport au corps de broche ainsi qu'un usinage très précis des dents des anneaux, d'où un brochage de grande précision.

Dans la broche conforme à l'invention, notamment pour le brochage de cannelures ou de profils analogues, dans laquelle au moins la section de finition est formée d'un empilage d'anneaux dentés enfilés et immobilisés sur un corps de broche de profil circulaire par une clavette, cette dernière est transversale, inclinée à faible pente et serrée entre un méplat ménagé dans chaque anneau et un méplat ménagé dans le corps de broche.

Dans le cas d'une broche intérieure, le méplat de chaque anneau est avantageusement constitué par le flanc extérieur d'une rainure transversale traversant chaque anneau d'un côté de l'axe de la broche de manière que son flanc intérieur forme un plan sécant de l'alésage de l'anneau.

Dans le cas d'une broche pour brochage du type « pot broaching » ou brochage en pot, auquel cas les anneaux sont entourés par un corps de broche creux, le méplat du corps de broche est avantageusement constitué par le flanc extérieur d'une rainure transversale traversant le corps de broche d'un côté de l'axe de la broche de manière que son flanc intérieur forme un plan sécant de l'alésage du corps de broche.

Ce clavetage assure un positionnement sans jeu et une orientation parfaite, à la fois radiale et circonférentielle, des anneaux par rapport au corps de broche et également les uns par rapport aux autres du fait que les clavettes des différents anneaux prennent appui sur des méplats du corps de broche qui se trouvent tous dans un même plan et qui, notamment sur une broche intérieure, peuvent être réalisés sous la forme d'un méplat longitudinal unique ménagé dans le corps de broche sur toute la longueur de la section recevant les anneaux. Pour la rectification de leur denture, les anneaux sont enfilés sur un montage ayant le même diamètre et le même méplat que le corps de broche et sont immobilisés sur ce montage avec les mêmes clavettes inclinées que sur le corps de broche. Par conséquent, la précision obtenue lors de la rectification des dents reste conservée lors du montage des anneaux sur le corps de broche. Les anneaux peuvent être rectifiés ensemble ou séparément, en utilisant un diviseur. La dépouille sur flancs peut être réalisée à l'aide de meules de grand diamètre.

Le clavetage conforme à l'invention des anneaux sur le corps de broche, qui exclut tout. jeu et toute erreur ou variation de positionnement permet d'intercaler un ou plusieurs anneaux de reprise d'alésage (brochage intérieur) ou de reprise de diamètre extérieur (brochage extérieur) entre les anneaux dentés clavetés. Ces anneaux intercalaires à tranchants circulaires n'exigent pas de positionnement circonférentiel et n'ont donc pas à être clavetés, leur centrage sur le corps de broche étant suffisant.

D'autres caractéristiques et avantages de l'objet de l'invention apparaîtront à la lecture de la description ci-après de deux modes de réalisation illustratifs et non limitatifs illustrés par le dessin annexé, sur lequel :

la fig. 1 est une coupe longitudinale d'une section de finition d'une broche intérieure pour cannelures ;

la fig. 2 est une coupe transversale suivant II-II de la fig. 1 ;

la fig. 3 est une coupe correspondant à celle de la fig. 2, montrant un moyen de blocage d'une clavette de positionnement d'un anneau.

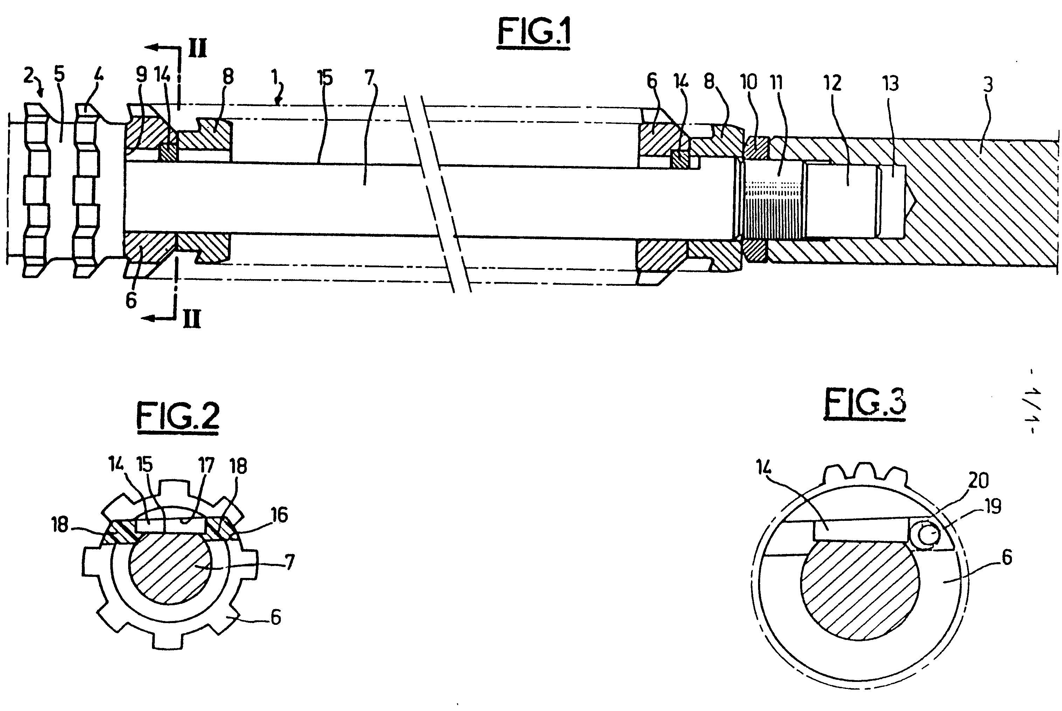

Sur la fig. 1 se trouve illustrée la section de finition 1 d'une broche pour le brochage intérieur de cannelures. La section de finition 1 est située entre l'extrémité arrière de la section de dégrossissage 2 et l'extrémité avant d'un embout de relevage 3. Le mouvement de brochage s'effectue de la droite vers la gauche sur la fig. 1, c'est-à-dire que le côté traction est situé sur la gauche.

La section de dégrossissage 2 comprend une succession d'anneaux dentés 4 dont deux seulement sont représentés. Les anneaux dentés 4 sont réalisés d'une seule pièce avec un corps de broche 5.

La section de finition 1 est formée d'un empilement d'anneaux dentés 6 enfilés sur un prolongement arrière cylindrique 7, de section réduite, du corps de broche 5. Les anneaux dentés 6 entre lesquels peuvent être intercalés un ou plusieurs anneaux de reprise d'alésage 8 sont serrés axialement contre un épaulement 9 prévu entre le corps de broche 5 et son prolongement 7, sous l'action d'un écrou 10 vissé sur une partie filetée 11 de l'embout d'extrémité 12 du prolongement 7. L'embout de relevage 3 présente un trou borgne axial 13 taraudé sur une partie de sa profondeur et vissé, derrière l'écrou 10, sur la partie filetée 11 de l'embout d'extrémité 12.

Les dents des anneaux 6 doivent être alignées avec précision sur les dents des anneaux 4 de la section de dégrossissage 2. Cet alignement doit être particulièrement précis lorsque les flancs des dents des anneaux 6 servent à la reprise des flancs des cannelures.

A cet effet, chaque anneau denté 6 est claveté sur le prolongement 7 du corps de broche 5 par une clavette transversale inclinée 14. Le prolongement 7 de section circulaire présente un méplat longitudinal 15 rectifié avec précision, sur toute la longueur de la section de finition 1. Chaque anneau denté 6 présente, de son côté, une rainure transversale 16, 17 débouchant à l'extrémité arrière de l'anneau 6. La profondeur de la rainure est sensiblement égale ou légèrement supérieure à la largeur de la clavette 14 de manière que cette dernière ne déborde pas axialement sur l'anneau 6.

Comme le montre la fig. 2, la rainure servant à recevoir la clavette dans l'anneau 6 présente un flanc intérieur 16 qui forme un plan sécant de l'alésage de l'anneau 6, tandis que le flanc ou méplat extérieur 17 qui est parallèle au flanc intérieur 16 se trouve situé entièrement à l'extérieur de l'alésage de l'anneau 6. La hauteur de la rainure, c'est-à-dire la distance entre les deux flancs 16 et 17 de la rainure, est supérieure à la hauteur maximale de la clavette 14. La profondeur du méplat 15 du prolongement 7 du corps de broche 5 est choisie de manière que la clavette 14 dont la pente est faible soit immobilisée par serrage entre le méplat 17 de la rainure de l'anneau 6 et le méplat 15 lorsqu'elle occupe une position sensiblement médiane dans la rainure de l'anneau et donc également par rapport au méplat 15 du prolongement 7.

Il ressort de la fig. 2 que ce clavetage des anneaux dentés assure un positionnement parfait à la fois radial et circonférentiel des anneaux par rapport au prolongement 7 du corps de broche 5 et également des anneaux les uns par rapport aux autres du fait que les clavettes des différents anneaux prennent appui sur un même méplat 15 rectifié avec précision. Le serrage obtenu par la clavette supprime tout risque de jeu radial et circonférentiel.

L'orientation correcte des dents des anneaux dentés est assurée par le fait que lors de la rectification de leur denture, les anneaux sont fixés, à l'aide des mêmes clavettes inclinées que celles servant à leur positionnement sur le corps de broche, sur un montage identique au prolongement 7 du corps de broche 5 et ayant le même centrage que la broche.

L'inclinaison ou pente des clavettes 14 est choisie suffisamment faible pour que le blocage des clavettes soit irréversible, par exemple de l'ordre de trois degrés.

Les anneaux de reprise d'alésage 8 ne sont pas clavetés du fait que ces anneaux présentent un tranchant circulaire qui n'exige pas d'orientation circonférentielle des anneaux par rapport au prolongement 7 du corps de broche. Les anneaux 8 sont donc simplement centrés, par leur alésage circulaire sur le prolongement 7.

Selon la fig. 2, les extrémités de la rainure de clavetage des anneaux dentés 6, lesquelles restent libres du fait que la clavette présente une longueur inférieure à la longueur de la rainure, sont obturées par une masse coulée, par exemple une matière plastique, formant deux bouchons 18. Ces bouchons évitent l'introduction des copeaux dans les extrémités libres ouvertes de la rainure de clavetage.

Dans le cas où les anneaux dentés présentent un grand diamètre et/ou les vibrations sur la machine de brochage sont très importantes au point que la clavette inclinée 14 risque de se débloquer malgré sa faible pente, il est préférable de prévoir des moyens empêchant avec certitude tout déblocage de la clavette.

La fig. 3 représente un tel moyen constitué, à titre d'exemple, par une vis 19 à excentrique 20. Cette vis 19 est vissée dans l'anneau 6, depuis le côté arrière de ce dernier, après enfoncement de la clavette 14 dans la rainure, de manière que l'excentrique 20 vienne porter et soit bloqué contre l'extrémité de plus grande hauteur de la clavette 14. Dans ce cas également, les extrémités libres de la rainure de clavetage de l'anneau 6 peuvent être obturées par une masse coulée.

Le déplacement des anneaux dentés 6 de la section de finition 1 en direction de la section de dégrossissage 2 pour compenser la diminution des cotes des dents au fur et à mesure des affûtages ne pose pas de difficulté avec le mode de clavetage suivant l'invention. Il suffit de dévisser la queue de relevage 3 et l'écrou 10 et de retirer l'ensemble des anneaux de la section de finition 1, après avoir débloqué les clavettes 14 des anneaux dentés 6. On enlève ensuite le premier anneau denté 6, c'est-à-dire l'anneau denté le plus proche de la section de dégrossissage 2, et on réenfile les anneaux dentés 6 restants, dans le même ordre, sur le prolongement 7 du corps de broche 5, en intercalant éventuellement des anneaux 8 non dentés de reprise d'alésage, avant d'ajouter un anneau denté 6 neuf en dernière position. Chaque anneau denté 6 est de nouveau claveté à l'aide de la même clavette 14 ce qui lui assure exactement le même positionnement qu'auparavant. Chaque anneau denté se trouve ainsi avancé au fur et à mesure des affûtages et participe à l'usinage jusqu'à l'extrême limite de résistance à la coupe.

L'invention n'est pas limitée au brochage de cannelures, qu'il s'agisse de cannelures à flancs parallèles (fig. 2) ou en développante de cercle (fig. 3). En effet, des broches pour la réalisation de profils quelconques peuvent être exécutées avec des anneaux ayant des tranchants de profil correspondant et positionnés sur un corps de broche par le clavetage conforme à l'invention.

Enfin, le positionnement par clavetage conforme à l'invention n'est pas limité à la section de finition d'une broche, mais pourrait être appliqué de la même manière à la section de dégrossissage subdivisée en anneaux rapportés sur un corps de broche.

**Revendications**

1. Broche pour cannelures ou profils analogues dont au moins la section de finition est formée d'un empilage d'anneaux dentés (6) enfilés et immobilisés sur un corps de broche (7) de profil circulaire par une clavette (14) caractérisée en ce qu'il s'agit d'une clavette transversale inclinée, de faible pente, serrée entre un méplat (17) ménagé dans chaque anneau et un méplat (15) ménagé dans le corps de broche.

2. Broche suivant la revendication 1, pour brochage intérieur, caractérisée par le fait que le méplat (17) de chaque anneau (6) est constitué par le flanc extérieur d'une rainure transversale traversant chaque anneau d'un côté de l'axe de la broche de manière que son flanc intérieur (16) forme un plan sécant de l'alésage de l'anneau.

3. Broche suivant la revendication 2, caractérisée par le fait que le méplat (15) du corps de broche, est un méplat longitudinal unique rectifié avec précision sur toute la longueur de l'empilage des anneaux (6).

4. Broche suivant la revendication 2, caractérisée par le fait que la longueur de la clavette (14) de l'anneau est inférieure à la longueur de la rainure (16, 17) et que les extrémités libres de la rainure sont obturées par une masse coulée (18).

5. Broche suivant l'une quelconque des revendications 1 à 4, caractérisée par le fait que la clavette (14) est bloquée en position de serrage par une vis (19) à excentrique (20).

6. Broche suivant l'une quelconque des revendications 1 à 5, appliquée au brochage de cannelures intérieures, caractérisée par le fait que des anneaux de reprise d'alésage (8) sont intercalés entre les anneaux dentés (6).

7. Utilisation d'une broche suivant l'une quelconque des revendications 1 à 6, au brochage de cannelures à flancs parallèles ou en développante de cercle.

## Claims

1. A broach for splines or similar shapes, in which at least the finishing section is formed by a pack of toothed rings (6) which are fitted on to and immobilised on a broach body portion (7) of circular configuration by a key, characterised in that the key is a transverse inclined key with a small amount of slope, which is gripped between a flat (17) provided in each ring and a flat (15) provided in the broach body portion.

2. A broach according to claim 1 for internal broaching characterised in that the flat (17) on each ring (6) is formed by the outward side surface of a transverse groove which extends through each ring on one side of the axis of the broach so that its inward side surface (16) forms a plane which cuts the bore of the ring.

3. A broach according to claim 2 characterised in that the flat (15) on the broach body is a single longitudinal flat which is precision-trued over the entire length of the pack of rings (6).

4. A broach according to claim 2 characterised in that the length of the key (14) of the ring is less than the length of the groove (16, 17), and that the free ends of the groove are closed by a cast material (18).

5. A broach according to any one of claims 1 to 4 characterised in that the key (14) is locked in the clamping position by a screw (19) with eccentric means (20).

6. A broach according to any one of claims 1 to 5 when used for broaching internal splines characterised in that bore reconditioning rings (8) are interposed between the toothed rings (6).

7. Use of a broach according to any one of claims 1 to 6 for broaching splines with parallel sides or sides in the form of an involute of a circle.

## Ansprüche

1. Räumwerkzeug zur Erzeugung von Nuten oder dgl., bei dem wenigstens der Schlichtabschnitt aus einer Aneinanderreihung von mit Zähnen versehenen Ringen (6) besteht, die auf einem Zapfen (7) des Räumwerkzeuges hintereinander angeordnet und mittels eines Keiles festgelegt sind, dadurch gekennzeichnet, daß der Keil ein geneigter Querkeil geringer Steigung ist, der zwischen einer Abflachung (17) eines jeden Ringes und einer Abflachung (15) im Zapfen des Räumwerkzeuges eingreift.

2. Räumwerkzeug nach Anspruch 1 zur Erzeugung von Innennuten, dadurch gekennzeichnet, daß die Abflachung (17) eines jeden Ringes (6) durch die Außenflanke einer Querrille gebildet ist, die jeden Ring von der Seite der Achse des Räumwerkzeuges aus derart durchsetzt, daß ihre Innenflanke (16) eine Ebene bildet, die eine Sekante zur Bohrung des Ringes ist.

3. Räumwerkzeug nach Anspruch 2, dadurch gekennzeichnet, daß die Abflachung (15) des Zapfens des Räumwerkzeuges eine einzige, längsgerichtete Abflachung ist, die präzis über die gesamte Länge der aneinandergereihten Ringe (6) ausgerichtet ist.

4. Räumwerkzeug nach Anspruch 2, dadurch gekennzeichnet, daß die Länge des Keiles (14) des Ringes kleiner als die Länge der Abflachungen (16, 17) ist, und daß die freien Enden der Rille durch eine Gießmasse (18) verschlossen sind.

5. Räumwerkzeug nach einem der Ansprüche 1-4, dadurch gekennzeichnet, daß der Keil (14) mittels einer mit einem Exzenter (20) versehenen Schraube (19) feststellbar ist.

6. Räumwerkzeug nach einem der Ansprüche 1-5 zur Erzeugung von Innennuten, dadurch gekennzeichnet, daß zwischen den mit Zähnen versehenen Ringen (6) Abstandhalteringe (8) angeordnet sind.

7. Verwendung eines Räumwerkzeuges gemäß einem der Ansprüche 1-6 zur Erzeugung von Nuten mit parallelen oder kreisevolventenförmigen Flanken.

**FIG.1**

**FIG.2**

**FIG.3**